# EUROPÄISCHE PATENTSCHRIFT

(11) **EP 0 697 760 B1**
(45) Veröffentlichungstag und Bekanntmachung des Hinweises auf die Patenterteilung: **17.06.1998**
(21) Anmeldenummer: 95112214.2
(22) Anmeldetag: 03.08.1995
(51) Int. Cl.: H02K 7/116, F16C 39/02, H02K 15/00

(54) **Antriebsaggregat**
Drive assembly
Equipement moteur

(30) Priorität: 17.08.1994 DE 4429173
(43) Veröffentlichungstag der Anmeldung: 21.02.1996
(73) Patentinhaber: SIEMENS AKTIENGESELLSCHAFT, 80333 München (DE)
(72) Erfinder: Büttel, Matthias, Dipl.-Ing., B-8000 Brugge (BE); Pfannschmidt, Bernd, Dipl.-Ing,, D-90574 Rosstal (DE)

(56) Entgegenhaltungen:
- DE-A- 2 626 750
- GB-A- 2 099 923
- US-A- 5 331 243
- PATENT ABSTRACTS OF JAPAN vol. 10, no. 217 (E-423) [2273] , 29.Juli 1986 & JP 61 054846 A (HITACHI), 19.März 1986,

## Beschreibung

Die Erfindung betrifft ein Antriebsaggregat mit einem Antriebsmotor, dessen Läufer am abtriebsseitigen Wellenende mittels eines Lagers gelagert ist, wobei das Lager in einer Lagerbohrung eines am abtriebsseitigen Ende des Motorgehäuses befestigten Getriebegehäuses eingesetzt ist.

Im bekannten Fall ist die Läuferwelle mit ihren Enden in Zylinderrollenlagern drehbar gelagert. Beide Lager werden durch das Läufergewicht belastet. Nach der Demontage bzw. vor der Montage des Getriebegehäuses entfällt die abtriebsseitige Abstützung der Läuferwelle. Dadurch kann der Läufer mit seinem Läuferblechpaket auf der Innenseite des Ständergehäuses aufliegen. Dies kann zu Beschädigungen an beiden Wellenlagern, insbesondere am abtriebsseitigen Wellenlager, führen. Im folgenden wird zur Unterscheidung zwischen beiden Enden des Antriebsmotors für das dem abtriebsseitigen Ende gegenüberliegende Ende der an sich nur bei Gleichstrommotoren übliche Zusatz "bürstenseitig" verwendet.

Aus der DE 91 15 647 U1 ist ein Antriebsmotor mit einer am antriebsseitigen Ende gelagerten Welle bekannt, wobei das Lager auf der dem hohl ausgebildeten Wellenende abgewandten Seite eines Ritzels auf einem mit diesem verbundenen Wellenstummel angeordnet und in die Lagerbohrung eines über ein Endschild mit dem Motorgehäuse verbundenen Lagerschildes eingesetzt ist. Bei einem Schaden des Lagers wird ein Notauslauf des Läufers dadurch erreicht, daß im Bereich einer Labyrinthdichtung an der Motorwelle ein einen Notauslauf des Läufers ermöglichender Ring angebracht ist, der gegenüber dem Material der Labyrinthdichtung Notlaufeigenschaften besitzt.

Die DE 34 18 114 C2 betrifft einen Wechselstrommotor zum Antrieb eines Walzwerks, mit einem Stator und einem Rotor, der auf einem Rotorkörper befestigt ist, wobei sich Wellenenden vom Rotorkörper sowohl zur Lastseite als auch zu der der Lastseite gegenüberliegenden Seite erstrecken und zwei Lagerböcke auf einem Fundament zum Tragen der beiden Wellenenden aufgebaut sind. Zum Ausbau des Rotors eines solchen Antriebs bedarf es eines nicht näher offenbarten Abstandshalters, der zum Einführen in die Lücke zwischen den Kernen der unteren Hälften des aktiven Statorteils und des aktiven Rotorteils geeignet ist, so daß der Rotor sich nicht verkantet. Da in der Regel den Monteuren ein solcher Abstandshalter nicht zur Verfügung steht, muß ein solcher zuerst gesucht oder angefertigt werden.

Das Dokument JP-A-61 054 846 beschreibt eine elektrische Maschine, bei der ein Lagerbock mit einer Hubvorrichtung versehen ist.

Aufgabe der vorliegenden Erfindung ist es, ein Antriebsaggregat der eingangs genannten Art zu schaffen, das einen einfachen Ausbau des Antriebsmotors oder des Getriebes ermöglicht.

Diese Aufgabe wird erfindungsgemäß durch die Merkmale des Patentanspruchs 1 gelöst. Vorteilhafte Ausgestaltungen der Erfindung sind in den weiteren Ansprüchen gekennzeichnet.

Bei dem erfindungsgemäßen Antriebsaggregat ist im Betriebszustand der Läufer mit seinem Gewicht über die abtriebsseitige sowie die bürstenseitige Lagerung abgestützt. Im Montagezustand ist das abtriebsseitige Lager durch wenigstens ein Hubelement vom Gewicht des Läufers entlastet. Dadurch wird ein einfacher Ausbau des Antriebsmotors oder des Getriebes ermöglicht. Außerdem wird sowohl bei der Montage als auch bei der Demontage des Antriebsaggregats eine Beschädigung der beiden Wellenlager zuverlässig vermieden.

Eine einfache und damit schnelle Montage bzw. Demontage des Antriebsaggregates wird bei einer Ausführungsform nach einem der Ansprüche 2 bis 5 gewährleistet, da hierbei der Läufer auch nach dem Ausbau des Antriebsmotors bzw. des Getriebes durch die Hubelemente unterstützt bleibt. Die Ausführungsform gemäß Anspruch 5 bietet den Vorteil, daß das Antriebsaggregat erforderlichenfalls auch an seiner bürstenseitigen Lagerung vom Gewicht des Läufers entlastet werden kann.

Bei einem Antriebsaggregat nach Anspruch 7 kann der Läufer durch das als Gewindespindel ausgebildete Hubelement besonders feinfühlig angehoben werden.

Für baugleiche, gemäß Anspruch 9 ausgeführte Antriebsaggregate wird jeweils nur ein Satz Hubelemente benötigt. Da die Hubelemente nicht als zu den Antriebsaggregaten gehörende Serienteile, sondern als entfernbare Vorrichtungen ausgebildet sind, ergibt sich darüber hinaus auch eine entsprechende Gewichtseinsparung.

Es ist vorteilhaft, wenn das Antriebsaggregat in der Weise ausgebildet ist, daß im Montagezustand der Läufer axial verschiebbar oder daß im Montagezustand wenigstens ein Teil des Läufers axial verschiebbar ist. Bei einer solchen Ausgestaltung ist bei der Demontage des Antriebsaggregates für den Antriebsmotor bzw. für das Getriebe kein Ausbauweg in Fahrzeugquerrichtung erforderlich. Dadurch ist auch bei Drehgestellen mit relativ kleinen Freiräumen eine Demontage von Antriebsmotor bzw. Getriebe bei nicht aus dem Fahrzeug ausgebautem Antriebsaggregat möglich.

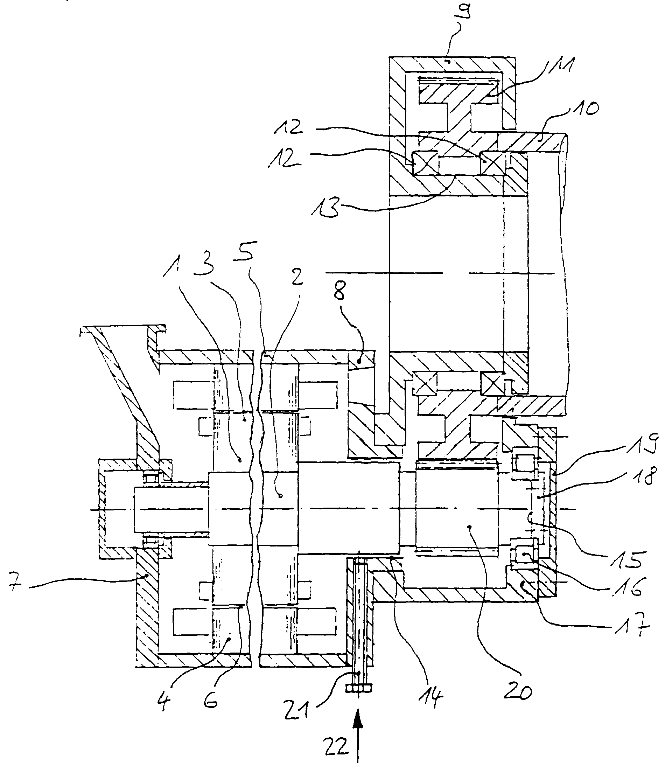

Anhand eines in der Zeichnung in einem Teil-Längsschnitt dargestellten Ausführungsbeispiels wird die Erfindung nachfolgend näher erläutert.

In der Zeichnung ist mit 1 der Läufer eines elektrischen Antriebsmotors bezeichnet, der eine Motorwelle 2 und ein auf dieser angeordnetes Läuferblechpaket 3 aufweist. Ein Ständerblechpaket 4, das im Motorgehäuse 5 befestigt ist, umgibt den Läufer 1 unter Belassung eines Luftspaltes 6.

Das Motorgehäuse 5 ist beidseitig von jeweils einem Motorschild 7 bzw.8 begrenzt. Zur Unterscheidung zwischen beiden Motorschilden 7 und 8 wird für das dem abtriebsseitigen Motorschild 8 gegenüberliegenden Motorschild 7 der an sich nur bei Gleichstrommotoren übliche Zusatz "bürstenseitig" verwendet.

An dem abtriebsseitigen Motorschild 8 ist ein Getriebegehäuse 9 befestigt, das zur Lagerung eines mit einer Hohlwelle 10 verdrehfest verbundene Großrades 11 ausgebildet ist. Das Großrad 11 ist hierzu mittels Wälzlager 12 im Lagersitz 13 des Getriebegehäuses 9 gelagert.

Das abtriebsseitige Motorschild 8 weist eine Bohrung 14 auf, durch die die Motorwelle 2 soweit in das Getriebegehäuse 9 hineinragt, daß sie mit ihrem abtriebsseitigen Ende 15 mittels eines Zylinderrollenlagers 16 im Getriebegehäuse 9 gelagert ist. Das Zylinderrollenlager 16 ist hierbei im Lagerkopf 17 des Getriebegehäuses 9 angeordnet. Der Lagerkopf 17 ist durch einen inneren Lagerdeckel 18 und einen äußeren Lagerdeckel 19 nach außen hin abgeschlossen.

Auf dem abtriebsseitigen Ende 15 der Motorwelle 2 ist ein Ritzel 20, das in Eingriff mit dem Großrad 11 steht, aufgeschrumpft.

Im abtriebsseitigen Motorschild 8 ist ein Hubelement 21 angeordnet, durch das das abtriebsseitige Lager 16 während der Montage bzw. Demontage des Antriebsaggregates vom Gewicht des Läufers 1 entlastet wird.

Das Hubelement 21 kann elektrisch, pneumatisch, hydraulisch oder mechanisch ausgebildet sein bzw. konstruktive Kombinationen der vorgenannten Art umfassen. Im vorliegenden Ausführungsbeispiel ist das Hubelement 21 als Gewindespindel ausgeführt.

Das Antriebsaggregat ist in der Zeichnung im Betriebszustand dargestellt. Beim Einschrauben der Gewindespindel 21 bewegt sich diese in Richtung des Pfeils 22. Dadurch wird das abtriebsseitige Lager 16 vom Gewicht des Läufers 1 entlastet.

## Patentansprüche

1. Antriebsaggregat mit einem Antriebsmotor, dessen Läufer (1) am abtriebsseitigen Wellenende (15) mittels eines Lagers (16) gelagert ist, wobei das Lager (16) in einer Lagerbohrung eines am abtriebsseitigen Ende des Motorgehäuses (5) befestigten Getriebegehäuses (9) eingesetzt ist,
**dadurch gekennzeichnet,**
daß im Montagezustand das Gehäuse (5, 9) des Antriebsaggregates für den Ein- und Ausbau des Motors (1-3) und/oder des Getriebes (10-13) sowie zur Entlastung der Wellenlager (16) vom Gewicht des Läufers (1) wenigstens ein Hubelement (21) aufweist.

2. Antriebsaggregat nach Anspruch 1,
**dadurch gekennzeichnet,**
daß das Hubelement (21) im Motorgehäuse (5) angeordnet ist.

3. Antriebsaggregat nach Anspruch 1,
**dadurch gekennzeichnet,**
daß das Hubelement (21) im Getriebegehäuse (9) angeordnet ist.

4. Antriebsaggregat nach Anspruch 1,
**dadurch gekennzeichnet,**
daß das Hubelement (21) im abtriebsseitigen Motorschild (8) angeordnet ist.

5. Antriebsaggregat nach Anspruch 1,
**dadurch gekennzeichnet,**
daß wenigstens ein Hubelement (21) im abtriebsseitigen Motorschild (8) und wenigstens ein Hubelement im bürstenseitigen Motorschild (7) angeordnet sind.

6. Antriebsaggregat nach einem der Ansprüche 1 bis 5,
**dadurch gekennzeichnet,**
daß das Hubelement (21) als Spindel ausgebildet ist.

7. Antriebsaggregat nach Anspruch 6,
**dadurch gekennzeichnet,**
daß die Spindel als Gewindespindel (21) ausgebildet ist.

8. Antriebsaggregat nach einem der Ansprüche 1 bis 5,
**dadurch gekennzeichnet,**
daß als Hubelement (21) ein Hubkolben vorgesehen ist.

9. Antriebsaggregat nach einem der Ansprüche 1 bis 8,
**dadurch gekennzeichnet,**
daß das Hubelement (21) im Betriebszustand entfernbar ist.

## Claims

1. Drive assembly having a drive motor, the rotor (1) of which is mounted on the output-side shaft end (15) by means of a bearing (16), with the bearing (16) being inserted in a bearing bore of a gearbox (9) fastened to the output-side end of the motor housing (5), characterized in that in the assembly state the housing (5, 9) of the drive assembly has at least one lifting element (21) for the installation and removal of the motor (1-3) and/or the gear unit (10-13) and for relieving the shaft bearings (16) of the weight of the rotor (1).

2. Drive assembly according to claim 1, characterized in that the lifting element (21) is arranged in the motor housing (5).

3. Drive assembly according to claim 1, characterized in that the lifting element (21) is arranged in the gearbox (9).

4. Drive assembly according to claim 1, characterized in that the lifting element (21) is arranged in the output-side motor plate (8).

5. Drive assembly according to claim 1, characterized in that at least one lifting element (21) is arranged in the output-side motor plate (8) and at least one lifting element is arranged in the brush-side motor plate (7).

6. Drive assembly according to one of claims 1 to 5, characterized in that the lifting element (21) is constructed as a spindle.

7. Drive assembly according to claim 6, characterized in that the spindle is constructed as a threaded spindle (21).

8. Drive assembly according to one of claims 1 to 5, characterized in that a lifting piston is provided as lifting element (21).

9. Drive assembly according to one of claims 1 to 8, characterized in that the lifting element (21) can be removed in the operating state.

## Revendications

1. Groupe moteur, comprenant un moteur d'entraînement dont le rotor (1) est monté à l'extrémité d'arbre (15) côté sortie au moyen d'un palier (16), le palier (16) étant monté dans un alésage de palier d'un carter de transmission (9) fixé à l'extrémité côté sortie du carter de moteur (5),
**caractérisé** en ce que le carter (5, 9) du groupe moteur présente, à l'état de montage, en vue du montage et du démontage du moteur (1-3) et/ou de la transmission (10-13) ainsi que pour décharger le palier d'arbre (16) du poids du rotor (1), au moins un élément de levage (21).

2. Groupe moteur selon la revendication 1, **caractérisé** en ce que l'élément de levage (21) est disposé dans le carter de moteur (5).

3. Groupe moteur selon la revendication 1, **caractérisé** en ce que l'élément de levage (21) est disposé dans le carter de transmission (9).

4. Groupe moteur selon la revendication 1, **caractérisé** en ce que l'élément de levage (21) est disposé dans le flasque de moteur (8) côté sortie.

5. Groupe moteur selon la revendication 1, **caractérisé** en ce qu'au moins un élément de levage (21) est disposé dans le flasque de moteur (8) côté sortie, et au moins un élément de levage dans le flasque de moteur (7) côté balais.

6. Groupe moteur selon l'une des revendications 1 à 5, **caractérisé** en ce que l'élément de levage (21) est réalisé sous forme de broche.

7. Groupe moteur selon la revendication 6, **caractérisé** en ce que la broche est réalisée sous forme de broche filetée (21).

8. Groupe moteur selon l'une des revendications 1 à 5, **caractérisé** en ce qu'un piston de levage est prévu comme élément de levage (21).

9. Groupe moteur selon l'une des revendications 1 à 8, **caractérisé** en ce que l'élément de levage (21) peut être déposé à l'état de service.
